# EUROPÄISCHE PATENTANMELDUNG

(11) **EP 3 199 338 A1**
(43) Veröffentlichungstag der Anmeldung: **02.08.2017**
(21) Anmeldenummer: 17000118.4
(22) Anmeldetag: 24.01.2017
(51) Int. Cl.: B32B 7/12, B32B 9/00, B32B 9/02, B32B 9/04, B32B 27/18, B32B 27/20, B32B 3/08, B32B 3/26, B32B 23/00, B32B 27/36, G06K 19/077

(54) **TRAGBARER DATENTRÄGER AUS NACHWACHSENDEN ROHSTOFFEN MIT CHIPMODUL**

(30) Priorität: 26.01.2016 DE 102016000779
(71) Anmelder: Giesecke & Devrient GmbH, 81677 München (DE)
(72) Erfinder: Riedl, Josef, 85395 Attenkirchen (DE)

(57) **Zusammenfassung**

Die vorliegende Erfindung betrifft einen tragbaren Datenträger 2, 10, der aus mehreren Folien 4, 6 aufgebaut ist, wobei die Folien 4, 6 aus nachwachsenden, zumindest teilweise kristallinen Rohstoffen bestehen, wobei ein Chipmodul 8, 12 im Datenträger 2, 10 angeordnet ist. Der Datenträger 2, 10 umfasst mindestens eine Folie 16 aus amorphen Material, wobei die Folie 16 aus amorphen Material ohne Verwendung von Hilfsstoffen, wie sie bisher im Stand der Technik notwendig sind, eine dauerhafte Verbindung sowohl mit den Folien 4, 6 aus nachwachsenden Rohstoffen als auch mit dem Chipmodul 8, 12 mittels eines Klebstoffs ausbildet.

## Beschreibung

Die vorliegende Erfindung beschreibt einen tragbaren Datenträger, der aus mehreren Folien aufgebaut ist, wobei die Folien aus nachwachsenden, zumindest teilweise kristallinen Rohstoffen bestehen. Im Datenträger ist ferner ein Chipmodul angeordnet.

Aus dem Stand der Technik ist bekannt, dass tragbare Datenträger, z.B. Chipkarten, Kreditkarten, Bankkarten, Sozialversicherungskarten, SIM-Karten, etc., aus nachwachsenden Rohstoffen hergestellt werden. Insbesondere werden Karten aus nachwachsenden, teilkristallinen Rohstoffen, z.B. Poly-Lactid-Acid, abgekürzt PLA, hergestellt. Die Verwendung von teilkristallinen Materialien ist notwendig, um eine für tragbare Datenträger geforderte Temperaturstabilität zu erfüllen. Der Nachteil von teilkristallinen Materialien, wie z.B. Polymeren, ist, dass sie sich schlecht laminieren bzw. verkleben lassen. Um diesen Nachteil zu beheben, werden Folien aus teilkristallinen Materialien entweder mit einem Siebdruck-Lack, abgekürzt SD-Lack, als Laminierhilfe bedruckt oder es werden kleberbeschichtete Folien verwendet, um eine dauerhafte Verbindung bei einer Laminierung oder einer Klebeverbindung herzustellen. Eine weitere Möglichkeit zur Herstellung einer dauerhaften Verbindung bei Folien aus teilkristallinen Materialien ist die Verwendung von coextrudierten Folien, wobei auf den Außenseiten jeweils ein amorphes PLA angeordnet ist, was sehr dünn ist. Dies wird beispielsweise in der DE-102013017927-A1 beschrieben.

Bei tragbaren Datenträgern aus nachwachsenden, teilkristallinen Materialien mit einem implantierten Chipmodul, das kontaktgebundene und/oder kontaktlose Schnittstellen aufweist, kommt es beim Implantieren der Chipmodule zu einer schlechten Verbindung zwischen Chipmodul und tragbaren Datenträger, d.h. die tragbaren Datenträger erfüllen nicht die gängigen Normen und bilden folglich ein sehr großes Risiko, dass tragbaren Datenträger im Feld ausfallen.

Es ist deshalb Aufgabe der vorliegenden Erfindung eine Lösung für die oben beschriebenen Probleme zur Verfügung zu stellen.

Die Aufgabe wird durch einen erfindungsgemäßen tragbaren Datenträger gelöst, der aus mehreren Folien aufgebaut ist, wobei die Folien aus nachwachsenden, zumindest teilweise kristallinen Rohstoffen bestehen, wobei ein Chipmodul im Datenträger angeordnet ist. Um die erfindungsgemäße Aufgabe zu lösen, umfasst der Datenträger mindestens eine Folie aus amorphen Material, wobei die Folie aus amorphen Material ohne Verwendung von Hilfsstoffen, wie sie bisher im Stand der Technik notwendig sind, eine dauerhafte Verbindung mit den angrenzenden Folien aus nachwachsenden Rohstoffen ausbildet. Ferner bildet die Folie aus amorphen Material eine dauerhafte Verbindung mittels eines Klebstoffs mit dem Chipmodul aus. Das Chipmodul wird mittels eines Klebstoffs mit dem tragbaren Datenträger dauerhaft verbunden. Der Klebstoff haftet nur an einem amorphen Material, z.B. einer amorphen Schicht einer entsprechenden Folie.

Ein vorteilhaftes Ausführungsbeispiel der Erfindung ist, dass eine Schicht aus amorphen Material so in der Folie aus amorphen Material angeordnet ist, dass sie sich mit einer Verbindungsfläche des Chipmoduls in einer gemeinsamen Ebene befindet, um sich dauerhaft zu verbinden. Dies hat den Vorteil, dass die Schicht aus amorphen Material in einer gemeinsamen Ebene wie die Verbindungsfläche des Chipmoduls angeordnet ist, um eine möglichst große Verbindungsfläche zu erzeugen und folglich eine entsprechende feste und dauerhafte Verbindung zwischen Chipmodul und tragbaren Datenträger zu erzielen.

Ein vorteilhaftes Ausführungsbeispiel der Erfindung ist, dass die Folie aus amorphen Material aus mindestens einer Schicht aus amorphen Material und mindestens einer Schicht aus kristallinen Material besteht. Durch den schichtweisen Aufbau aus amorphen und kristallinen Material können vorteilhaft z.B. die biegeelastischen Eigenschaften der Folie je nach Anwendung eingestellt werden.

Ein weiteres vorteilhaftes Ausführungsbeispiel der Erfindung ist, dass die Folie aus amorphen Material auf mindestens einer Außenseite die Schicht aus amorphen Material aufweist. Der Vorteil der amorphen Schicht auf der Außenseite ist, dass eine dauerhafte Verbindung mit den benachbarten kristallinen Folien aus nachwachsenden Rohstoffen gebildet wird. Ferner kann über die Außenseite eine Verbindung mit dem Chipmodul hergestellt werden.

Ein weiteres vorteilhaftes Ausführungsbeispiel der Erfindung ist, dass die Folie aus amorphen Material abwechselnd aus einer Schicht mit amorphen Material und aus einer Schicht mit kristallinen Material aufgebaut ist.

Ein weiteres vorteilhaftes Ausführungsbeispiel der Erfindung ist, dass die Folie aus amorphen Material insgesamt aus drei oder fünf Schichten besteht. Eine technisch bevorzugte Ausführung ist eine Folie aus drei oder fünf Schichten aus sich abwechselnden amorphen und kristallinen Materialien, da gerade bei einer symmetrischen Struktur der Folie die vorteilhaftesten Eigenschaften bezüglich Ausbildung einer dauerhaften Verbindung mit benachbarten Folienschichten, als auch einer Verbindung mit dem Chipmodul erreicht werden. Je nach Lage der Verbindungsfläche des Chipmoduls kann die Lage einer entsprechenden amorphen Materialschicht in der Folie aus amorphen Material bestimmt werden, um eine möglichst dauerhafte Verbindung zu erhalten.

Ein weiteres vorteilhaftes Ausführungsbeispiel der Erfindung ist, dass die Folie aus amorphen Material in mindestens einer Schicht mindestens einen Zusatzstoff enthält. Mittels Zusatzstoffen können die Eigenschaften der Folie z.B. hinsichtlich mechanischer Eigenschaften, Verarbeitbarkeit oder Markierbarkeit bestimmt werden. Als Zusatzstoffe bieten sich hierzu beispielsweise ein Laseradditiv, ein Releaseadditiv, und/oder ein Modifier an. Das Laseradditiv ermöglicht eine Personalisierung mittels Laser. Das Releaseadditiv trägt dazu bei, dass die Folie nicht an Rollen, z.B. Kalanderrollen, oder Laminierblechen haften bleibt. Der Modifier bezieht sich auf die Familie der sogenannten Impactmodifier, um z.B. einen Schlagzähmodifizierer der Folie einzustellen.

Weitere Merkmale und Vorteile der Erfindung ergeben sich aus der folgenden Beschreibung von erfindungsgemäßen Ausführungsbeispielen sowie weiteren Ausführungsalternativen in Zusammenhang mit den Zeichnungen.
Figuren 1 und 2 zeigen zwei unterschiedliche Aufbauten eines tragbaren Datenträgers gemäß Stand der Technik.
Figur 3 zeigt ein erstes erfindungsgemäßes Ausführungsbeispiel einer symmetrischen Folie aus amorphen Material, die aus fünf Schichten besteht.
Figur 4 zeigt ein zweites erfindungsgemäßes Ausführungsbeispiel einer unsymmetrischen Folie aus amorphen Material, die aus drei Schichten besteht.

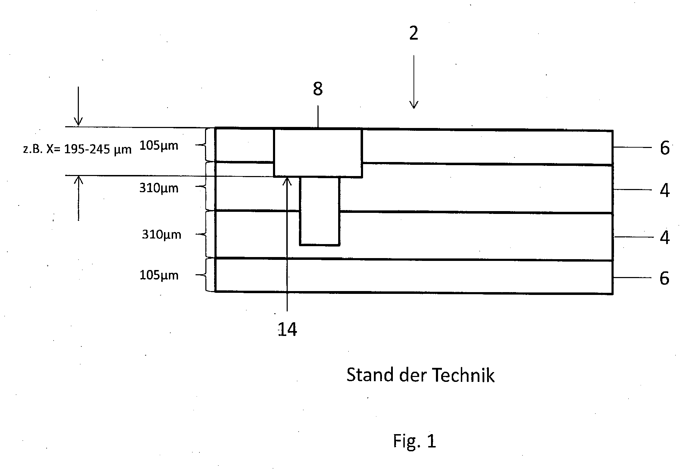

Figur 1 stellt beispielhaft einen tragbaren Datenträger 2 gemäß Stand der Technik dar, welcher aus zwei opaken Kernfolien 4 und zwei transparenten Overlayfolien 6 aufgebaut ist und typisch ist für Anwendungen mit einem kontaktbehafteten Chipmodul 8. Die Kernfolien 4 und die Overlayfolien 6 bestehen aus nachwachsenden Rohstoffen, z.B. PLA.

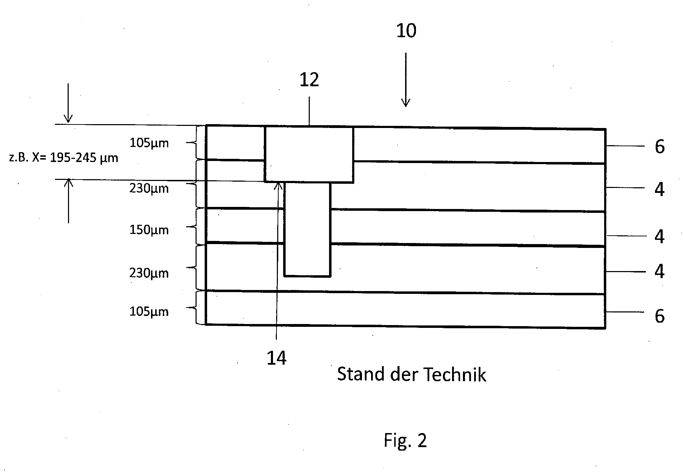

Figur 2 stellt beispielhaft einen tragbaren Datenträger 10 gemäß Stand der Technik dar, welcher aus drei opaken Kernfolien 4 und zwei transparenten Overlayfolien 6 aufgebaut ist und typisch ist für Anwendungen mit einem kontaktbehafteten und kontaktlosen Chipmodul 12, sogenanntes Dualinterface-Modul. Wie oben bestehen auch hier die Kernfolien 4 und die Overlayfolien 6 aus nachwachsenden Rohstoffen, z.B. PLA.

Die Figuren 1 und 2 zeigen, dass die Kernfolien 4 in der Regel eine Dicke von 310µm bzw. 230µm und die Overlayfolien eine Dicke von 105µm haben. Um die Kernfolien 4 und die Overlayfolien 6 miteinander zu verbinden, ist zwischen den Kernfolien 4 und/oder zwischen den Kernfolien 4 und den Overlayfolien 6 ein Klebstoff oder ein Lack angeordnet oder es werden coextrudierte Folien mit einer dünnen amorphen Außenschicht verwendet werden, um eine Verbindung zwischen den Folien herzustellen. Die Klebe- oder Verbindungsfläche 14 des Chipmoduls 8, 12 befindet sich in der Regel in einer Tiefe von 210µm-230µm gemessen von einer Oberfläche des tragbaren Datenträgers 2, 10, je nach Modul 8, 12. Dabei müssen Toleranzen von +/- 15µm berücksichtigt werden. D.h. das Modul 8, 12 wird in ein kristallines, schwer verklebbares Material eingebracht und fixiert. Selbst mit ausgewählten Klebstoffen und Prozessparametern, z.B. Laminiertemperaturen, welche den tragbaren Datenträger beschädigen, kann keine ausreichend gute und stabile Qualität von Verbindungen zwischen dem Modul 8, 12 und dem tragbaren Datenträger 2, 10 erzielt werden.

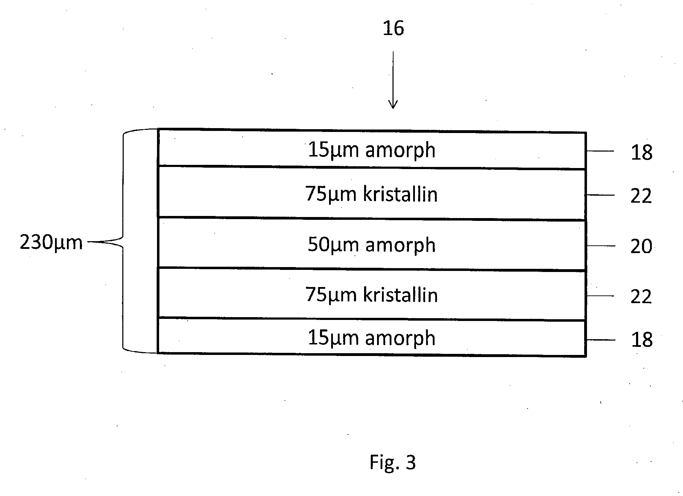

Um dieses Problem zu lösen, wird eine coextrudierte Folie verwendet, wobei zur Verbindung des Moduls 8, 12 mit dem Datenträger 2, 10 eine Schicht der Folie aus einem amorphen Material besteht. Die Schicht wird so in der Folie positioniert, dass sie in einer Ebene mit der Verbindungsfläche des Chipmoduls 8, 12 liegt. Dazu werden beispielsweise in Figur 2 die Kernfolien 4 mit einer Dicke von jeweils 230 µm ersetzt durch eine erfindungsgemäße Folie, wie sie in Figur 3 dargestellt ist.

Figur 3 zeigt eine erfindungsgemäße Folie 16 aus amorphen Material, welche z.B. aus fünf Schichten besteht. Die Folie 16 weist auf ihren Außenseiten jeweils eine Schicht 18 aus amorphen Material mit einer Dicke von 15 µm auf. In der Mitte der Folie 16 befindet sich eine Schicht 20 aus amorphen Material mit einer Dicke von 50 µm. Zwischen den Schichten 18 und 20 befinden sich zwei Schichten 22 aus kristallinen Material mit einer Dicke von 75 µm.

Hergestellt wird die Folie 16 mittels drei Extrudern. Die Materialzusammensetzung für die Schichten 18, 20 und 22 sind unterschiedlich. Neben der Folie 16 mit fünf Schichten, kann auch eine Folie mit drei Schichten hergestellt werden. Optimal ist immer eine symmetrische Struktur der Folie. Grundsätzlich möglich ist auch eine Folie, die aus zwei Schichten besteht. Allerdings sind Folien aus zwei Schichten schwer herzustellen, aufgrund z.B. einer Wölbung der Folie oder von Spannungen im Material, und können meist nicht im optimalen Arbeitsbereich einer Extruderanlage hergestellt werden.

Zur Herstellung der Folie 16 werden die Extruder in Form und Größe, d.h. Materialdurchsatz pro Stunde, der herzustellenden Folie angepasst. Wenn z.B. eine Folie mit einer dicken Innenschicht 20 aus einem Material C und einer dünnen Zwischenschicht 22 aus einem Material B und einer sehr dünnen Außenschicht 18 aus einem Material A hergestellt werden soll, dann werden die einzelnen Extruder z.B. folgendermaßen konfiguriert:
- Extruder für Material C: 275 kg/h Materialdurchsatz pro Stunde,
- Extruder für Material B: 150 kg/h Materialdurchsatz pro Stunde,
- Extruder für Material A: 75 kg/h Materialdurchsatz pro Stunde.

Nur wenn die Extruder mit diesen Durchsätzen betrieben werden, dann erzielt man das beste Ergebnis, sowohl technisch als auch wirtschaftlich. Natürlich können die Durchsätze um ca. 25% verändert werden. Dies ist aber materialabhängig und verschlechtert in der Regel den Ertrag und die Qualität.

Mit diesen drei Extrudern können z.B. folgende Konfigurationen von Folien hergestellt werden.

Es kann eine Folie aus zwei Schichten hergestellt werden, wobei von zwei Extrudern das gleiche Material verarbeitet wird. Aufgrund der beiden Schichten entsteht ein unsymmetrischer Folienaufbau bestehend aus einer amorphen und einer kristallinen Schicht.

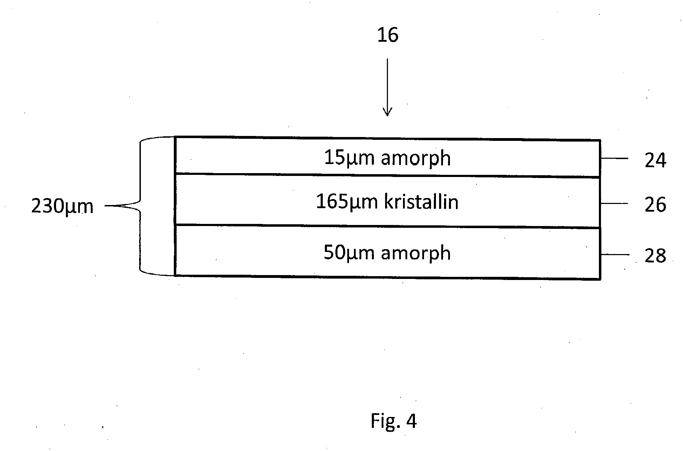

Es kann eine Folie 16 aus drei Schichten 24, 26, 28 hergestellt werden, wie sie in Figur 4 dargestellt ist. Es werden zwei verschiedene Materialien, amorph und kristallin, verarbeitet, wobei aufgrund der unterschiedlichen Schichtdicken die Folie 16 unsymmetrisch wird, da zwei Außenschichten 24 und 28 aus amorphen Material unterschiedlich dick sind. Die beiden Außenschichten 24 und 28 umgeben eine Innenschicht 26 aus kristallinen Material.

Die vorteilhafteste Variante ist die Folie 16 mit fünf Schichten, wie sie in Figur 3 beschrieben wird. Diese Variante wird ebenfalls bei einer Anlage mit drei Extrudern verwendet. Dabei werden drei verschiedene Rezepturen von Material für jede Schicht 18, 20 und 22 verwendet und somit eine symmetrische Struktur der Folie 16 erreicht.

Die Schichten in Figur 3 können beispielsweise aus folgenden Materialien bestehen:
- Außenschicht 18: PLA, amorph, z.B. nature works 4060D,
- Zwischenschicht 22: PLA, kristallin, z.B. stereo complex PLA von Corbion,
- Innenschicht 20: PLA, amorph, z.B. nature works 4060D

Grundsätzlich sind auch alle anderen geeigneten Materialien aus nachwachsenden Rohstoffen, z.B. Polyhydroxyvalerate, abgekürzt mit PHV, Polyhydroxybutyrate, abgekürzt PHB, Succinate, Cellulosederivate, etc., möglich, um mit diesen gemäß ihrer amorphen/kristallinen Struktur eine Folie herzustellen.

Die Folie 16 wird über die gesamte Fläche des tragbaren Datenträgers integriert und ist folglich mit ein Bestandteil des Aufbaus des Datenträgers.

In die einzelnen Schichten der Folie 16 können Zusatzstoffe integriert werden. In der Außenschicht 18 der Folie 16 werden vorzugsweise ein Releaseadditiv, ein Laseradditiv und/oder ein Modifier integriert. In den inneren Schichten 20 und 22 werden vorzugsweise ein Laseradditiv und /oder ein Modifier integriert.

### Bezugszeichenliste

- 2: tragbarer Datenträger
- 4: opake Kernfolien
- 6: transparente Overlayfolie
- 8: kontaktbehaftetes Chipmodul
- 10: tragbarer Datenträger
- 12: kontaktbehaftetes und kontaktloses Chipmodul, sog. Dualinterface
- 14: Klebe- oder Verbindungsfläche des Chipmoduls
- 16: erfindungsgemäße Folie aus amorphen Material
- 18: Außenschicht aus amorphen Material
- 20: Innenschicht aus amorphen Material
- 22: Zwischenschicht aus kristallinen Material
- 24: Außenschicht aus amorphen Material
- 26: Innenschicht aus kristallinen Material
- 28: Außenschicht aus amorphen Material

## Patentansprüche

1. Tragbarer Datenträger (2, 10), der aus mehreren Folien (4, 6) aufgebaut ist, wobei die Folien (4, 6) aus nachwachsenden, zumindest teilweise kristallinen Rohstoffen bestehen,
wobei ein Chipmodul (8, 12) im Datenträger angeordnet ist,
**dadurch gekennzeichnet, dass** der Datenträger (2, 10) mindestens eine Folie (16) aus amorphen Material umfasst,
wobei die Folie (16) aus amorphen Material ohne Verwendung von Hilfsstoffen eine dauerhafte Verbindung sowohl mit den Folien (4, 6) aus nachwachsenden Rohstoffen als auch mit dem Chipmodul (8, 12) unter Verwendung eines Klebstoffs ausbildet.

2. Datenträger nach Anspruch 1, **dadurch gekennzeichnet, dass** eine Schicht (18, 20) aus amorphen Material so in der Folie (16) aus amorphen Material angeordnet ist, dass sie sich mit einer Verbindungsfläche (14) des Chipmoduls (8, 12) in einer gemeinsamen Ebene befindet, um sich dauerhaft zu verbinden.

3. Datenträger nach Anspruch 2, **dadurch gekennzeichnet, dass** die Folie (16) aus amorphen Material aus mindestens einer Schicht (18, 20) aus amorphen Material und mindestens einer Schicht aus kristallinen Material (20) besteht.

4. Datenträger nach Anspruch 3, **dadurch gekennzeichnet, dass** die Folie (16) aus amorphen Material auf mindestens einer Außenseite die Schicht (18) aus amorphen Material aufweist.

5. Datenträger nach Anspruch 4, **dadurch gekennzeichnet, dass** die Folie (16) aus amorphen Material abwechselnd aus einer Schicht (18, 20) mit amorphen Material und aus einer Schicht (20) mit kristallinen Material aufgebaut ist.

6. Datenträger nach Anspruch 5, **dadurch gekennzeichnet, dass** die Folie (16) aus amorphen Material insgesamt aus drei oder fünf Schichten besteht.

7. Datenträger nach einem der vorhergehenden Ansprüche, **dadurch gekennzeichnet, dass** die Folie (16) aus amorphen Material in mindestens einer Schicht mindestens einen Zusatzstoff enthält.

8. Datenträger nach Anspruch 7, **dadurch gekennzeichnet, dass** der Zusatzstoff ein Laseradditiv, ein Releaseadditiv, und/oder ein Modifier ist.
